## Europäisches Patentamt
## European Patent Office
## Office européen des brevets

(19)

(11) Numéro de publication: **0 179 678**
**B1**

(12)
# FASCICULE DE BREVET EUROPÉEN

(45) Date de publication du fascicule du brevet:
**16.03.88**

(51) Int. Cl.⁴: **C 12 G 1/06,** B 65 B 3/30, G 01 F 11/28, G 01 F 11/00

(21) Numéro de dépôt: **85401704.3**

(22) Date de dépôt: **02.09.85**

(54) **Procédé et appareil de transfert et/ou de dosage de particules fragiles à cadence élevée en vue par exemple de l'insertion dans un récipient.**

(30) Priorité: **02.10.84 FR 8415129**

(43) Date de publication de la demande:
**30.04.86 Bulletin 86/18**

(45) Mention de la délivrance du brevet:
**16.03.88 Bulletin 88/11**

(84) Etats contractants désignés:
**AT BE DE FR GB IT LU NL**

(56) Documents cité:
**DE-A-3 202 655**
**FR-A-2 432 095**
**US-A-2 356 176**
**US-H-394 742**

(73) Titulaire: **CHAMPAGNE MÖET & CHANDON, 20 avenue de Champagne, F-51200 Epernay (FR)**

(72) Inventeur: **Duteurtre, Bruno Henri Jean, 98bis rue de l'Hôpital, F-51200 Epernay (FR)**
Inventeur: **Coulon, Philippe Antoine, 24 rue de Vignolles, F-51200 Epernay (FR)**
Inventeur: **Goutard, René Michel, 86 rue d'Anblainvilliers, F-91370 Verrieres le Buisson (FR)**

(74) Mandataire: **Portal, Gérard, Cabinet Z. Weinstein 20, Avenue de Friedland, F-75008 Paris (FR)**

EP 0 179 678 B1

## Description

La présente invention concerne un procédé et un appareil de transfert et/ou de dosage de particules solides fragiles, notamment à cadence élevée en vue d'une utilisation quelconque, par exemple l'insertion dans un récipient, notamment une bouteille, lesdites particules solides fragiles étant de préférence des billes d'alginate incluant des microorganismes, en particulier des levures, en vue de réaliser notamment la fermentation d'un liquide susceptible de fermenter, comme du jus de raisin, du vin, de préférence du vin de champagne.

On connaît déjà, d'après le document US-H-394 742, un procédé de fermentation secondaire du champagne dans des bouteilles, et qui consiste à introduire dans les bouteilles un sachet semi-perméable contenant une levure, ce qui permet notamment d'empêcher la contamination du vin avec des produits solides.

Par ailleurs, pour fabriquer du vin de champagne pétillant, il est connu de mélanger les levures au vin additionné de sucre dans des grands réservoirs et ce mélange homogène est injecté dans les bouteilles par gravité et/ou dépression et/ou surpression par des dispositifs de dosage volumétrique ou continu mettant en oeuvre des organes mécaniques, par exemple des tiroirs, des clapets, des vis sans fin ou des vannes.

Cette technique précédente a été améliorée par l'inclusion des levures dans un matériau d'inclusion, tel qu'un alginate, se présentant sous forme de billes sphériques (voir le brevet français 78 22131 (24 32 045) INRA).

Ce procédé d'inclusion des levures ou autres microorganismes de fermentation dans un matériau d'inclusion, se présentant sous forme de billes gélifiées solides, facilite grandement la séparation des levures ou autres microorganismes après la fermentation.

Cependant, la demanderesse a mis en évidence un nouveau problème technique posé par cette inclusion des levures et qui réside dans la nécessité de ne pas détériorer le matériau d'inclusion dans l'étape de transfert de billes incluant les levures ou autres microorganismes dans les bouteilles ou autres récipients de fermentation, pour ne pas libérer des levures ou autres microorganismes dans le milieu à fermenter tel que du vin ou du jus de raisin car cette libération des levures ou autres microorganismes réduirait à néant l'intérêt du procédé d'inclusion qui consiste en la séparation aisée des levures ou autres microorganismes de fermentation du milieu fermenté et pour éviter d'autre part une turbidité anormale qui est néfaste pour la commercialisation du produit ou la conservation de celui-ci en particulier pour le vin ou le champagne.

La présente invention a donc pour but de résoudre ce nouveau problème technique.

D'autre part, la présente invention a aussi pour but de fournir une solution résolvant ce nouveau problème technique d'une manière extrêmement simple, qui ne détériore pas le matériau d'inclusion en toutes circonstances lors de l'étape de transfert du matériau d'inclusion en forme de billes incluant des levures ou autres microorganismes de fermentation.

D'autre part, un autre problème technique qui se pose est le dosage précis de la quantité de microorganismes inclus par exemple des levures à incorporer dans le récipient, notamment une bouteille, à soumettre à la fermentation.

Ainsi, l'invention a encore pour but de fournir une solution permettant un dosage très précis de la quantité de levure ou de microorganisme transférée dans un récipient, notamment une bouteille.

Enfin, la présente invention a aussi pour but de fournir une solution qui soit applicable dans le cas général du transfert et/ou du dosage de particules solides fragiles, sans les endommager, et à cadence élevée.

Ainsi, la présente invention, selon un premier aspect, fournit un procédé de transfert et/ou de dosage de particules solides fragiles sans les endommager, notamment à cadence élevée, en vue d'une utilisation quelconque, par exemple l'insertion dans un récipient, notamment une bouteille, caractérisé en ce qu'il comprend:

- la prévision d'un dispositif de transfert et/ou de dosage comprenant une chambre allongée comportant une paroi latérale, de préférence sensiblement cylindrique, définissant ladite chambre, ladite chambre ayant une extrémité inférieure ouverte et une extrémité supérieure fermée et comportant une cloison transversale pourvue d'au moins un orifice, de préférence une pluralité d'orifices, de diamètre inférieur à celui des particules solides, et disposée sensiblement perpendiculairement à ladite paroi latérale et à distance des extrémités de ladite chambre de manière à subdiviser ladite chambre en deux compartiments communiquant par lesdits orifices, un premier compartiment de transfert et/ou de dosage proprement dit se terminant à son extrémité inférieure par une ouverture définie par l'extrémité inférieure ouverte de ladite chambre, et un deuxième compartiment dit d'aspiration ou de refoulement coopérant avec des moyens d'aspiration ou de refoulement;

- la mise en suspension des particules solides dans un liquide approprié;

- l'insertion d'au moins la partie inférieure du premier compartiment dans ladite suspension;

- l'aspiration de ladite suspension par actionnement dudit moyen d'aspiration de manière à aspirer ledit liquide jusque dans ledit deuxième compartiment tandis que les particules solides sont emmagasinées dans ledit premier compartiment de transfert et/ou de dosage jusqu'à effleurement de ladite ouverture du premier compartiment;

- le déplacement du dispositif de transfert et/ou de dosage hors de ladite suspension et jusqu'à un lieu d'insertion desdites particules solides; et

-le refoulement desdites particules solides par actionnement dudit moyen de refoulement en refoulant ainsi ledit liquide du deuxième compartiment et lesdites particules solides fragiles alors entraînées dans ledit liquide, et dans ledit récipient.

Selon un mode de réalisation préféré du procédé selon l'invention, on réalise les opérations d'insertion, d'aspiration, de déplacement et de refoulement de manière automatisée par la prévision de moyens de commande appropriés, de préférence des moyens de commande mécanique.

Selon un mode de réalisation particulier, les moyens de commande comprennent des éléments formant came coopérant avec des éléments suiveurs de came.

Selon une application particulièrement préférée du procédé selon l'invention, les particules sont des billes sphériques d'alginate de calcium incluant des microorganismes de fermentation, en particulier en suspension dans un liquide susceptible de fermenter, en particulier choisi parmi le vin, de préférence du vin de champagne, ou du jus de raisin. Dans ce cas particulier, l'insertion est de préférence réalisée dans des bouteilles.

En outre, selon un mode de réalisation particulièrement préféré, les particules solides sont substituées par des billes de polymère de densité supérieure ou légèrement supérieure à celle du liquide susceptible de fermenter par les microorganismes inclus.

Selon un autre aspect, la présente invention concerne également un appareil de transfert et/ou de dosage de particules solides fragiles, notamment à cadence élevée, sans les endommager, en vue d'une utilisation quelconque, par exemple l'insertion dans un récipient, notamment une bouteille, caractérisé en ce qu'il comprend un dispositif de transfert et/ou de dosage comprenant une chambre allongée comportant une paroi latérale, de préférence essentiellement cylindrique, définissant ladite chambre, ladite chambre ayant une extrémité inférieure ouverte et une extrémité supérieure fermée comportant une cloison transversale pourvue d'au moins un orifice, de préférence une pluralité d'orifices, de diamètre inférieur au diamètre desdites particules solides, et disposée sensiblement perpendiculairement à ladite paroi latérale et à distance des extrémités de ladite chambre de manière à subdiviser ladite chambre en deux compartiments communiquant par lesdits orifices, un premier compartiment de transfert et/ou de dosage proprement dit se terminant à son extrémité inférieure par une ouverture définie par l'extrémité inférieure ouverte de ladite chambre, et un deuxième compartiment dit d'aspiration ou de refoulement coopérant avec des moyens d'aspiration ou de refoulement; et des moyens d'actionnement desdits moyens d'aspiration ou de refoulement.

Selon un mode de réalisation de l'appareil selon l'invention, les moyens d'aspiration ou de refoulement comprennent un piston agencé dans le deuxième compartiment dit d'aspiration ou de refoulement, de manière coulissante relativement audit compartiment en formant ainsi un corps de vérin; ledit piston étant actionné par les moyens d'actionnement précités. Selon une réalisation particulière, les moyens d'actionnement comprennent des moyens de commande mécanique. De préférence, ces moyens de commande mécanique comprennent des éléments formant came et des éléments suiveurs de came.

Selon un mode de réalisation actuellement préféré, le dispositif de transfert et/ou de dosage est monté déplaçable en translation verticale et en rotation relativement à un châssis, entre une position de prélèvement ou d'aspiration des particules solides en suspension dans un réservoir approprié, à une position de refoulement des particules solides dans un récipient quelconque en particulier une bouteille.

Selon une réalisation particulièrement préférée, l'appareil selon l'invention comprend un barillet monté rotatif relativement au châssis et pourvu d'une pluralité de dispositifs de transfert et/ou de dosage espacés entre eux selon un pas déterminé; des moyens d'acheminement de récipients de réception des particules solides, notamment des bouteilles, en regard de chaque dispositif de transfert et/ou de dosage. Ces moyens d'acheminement peuvent comprendre un barillet de distribution de récipient, radialement externe par rapport au barillet comportant le dispositif de transfert et/ou de dosage; et des moyens de mise en rotation synchronisée du barillet pourvu du dispositif de transfert et/ou de dosage et des moyens d'acheminement (62, 64).

Ainsi, grâce à l'invention définie par le procédé ou l'appareil précédemment mentionné, on obtient un transfert de particules solides fragiles en toute sécurité, sans les endommager. D'autre part, étant donné que le liquide de mise en suspension des particules solides est séparé desdites particules solides dans ledit deuxième compartiment, lesdites particules solides se retrouvent dans le premier compartiment, selon donc une quantité dosée clairement déterminée par le volume du premier compartiment.

Ainsi, en prédéterminant le volume du premier compartiment, on déterminera de manière inhérente un dosage précis des particules solides.

Ces avantages techniques fournis par la présente invention sont tout à fait nouveaux et clairement inattendus pour un homme du métier.

D'autres buts, caractéristiques et avantages de la présente invention apparaîtront à la lumière de la description explicative qui va suivre faite en référence aux dessins annexés représentant un mode actuellement préféré d'un appareil selon la présente invention donné simplement à titre d'illustration et qui ne saurait donc en aucune façon limiter la portée de l'invention. Dans les dessins:

La figure 1 est une vue latérale en élévation, avec coupe partielle et arrachement partiel du mode de réalisation actuellement préféré d'un appareil de transfert et/ou de dosage de particules solides fragiles selon la présente invention notamment à cadence élevée.

La figure 2 est une vue de dessus selon la flèche II de la figure 1.

La figure 3 est une vue en demi-coupe axiale verticale ou longitudinale de la partie gauche de l'appareil représenté à la figure 1.

La figure 4 est une demi-coupe axiale verticale ou longitudinale de la partie droite de l'appareil représenté à la figure 1.

La figure 5 est une vue selon la flèche V de la figure 4.

La figure 6 est une vue représentant le profil des moyens formant came; la courbe A représentant le profil du moyen formant came du piston du dispositif de transfert et/ou de dosage selon la présente invention; la courbe B représente le profil du moyen formant came du dispositif de transfert et/ou de dosage selon la présente invention; et la courbe C représente le profil du moyen formant came de déplacement en rotation du dispositif de transfert et/ou de dosage selon la présente invention; ces courbes étant relatives à un point fixe par rapport au sol.

La figure 7 représente schématiquement la courbe de déplacement des bouteilles, représentant le mode de réalisation préféré des récipients, dans lesquels doivent être insérées les particules solides fragiles, ainsi que le parcours cinématique du dispositif de transfert et/ou de dosage; et

La figure 8 représente une vue agrandie du dispositif de transfert et/ou de dosage.

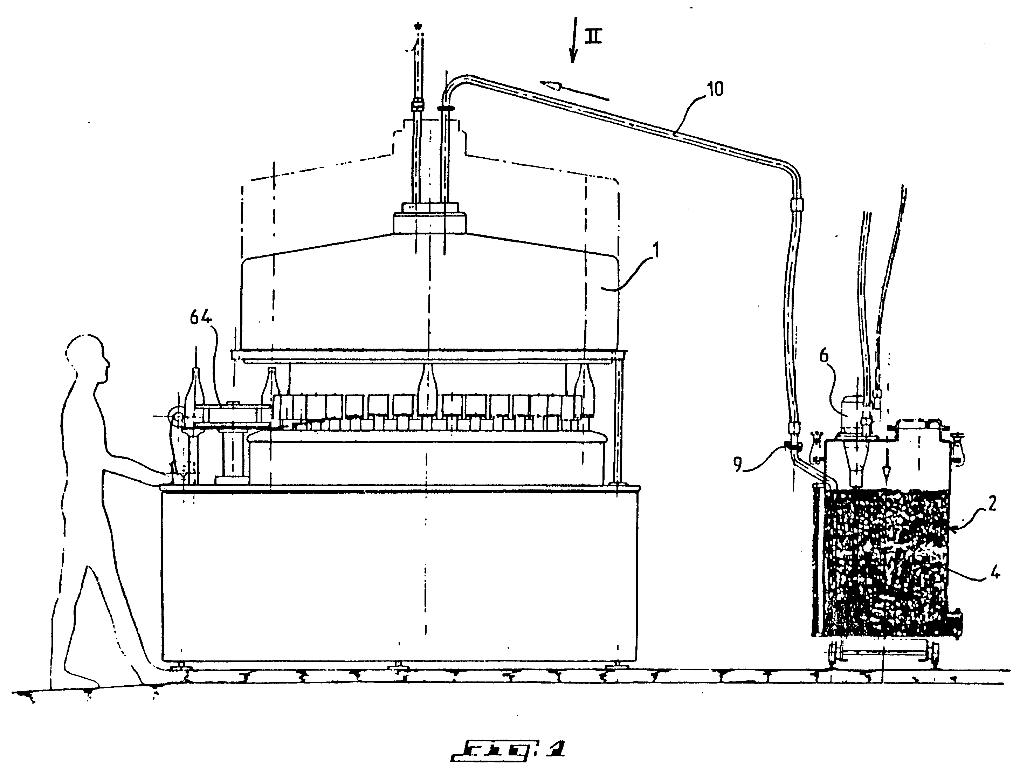

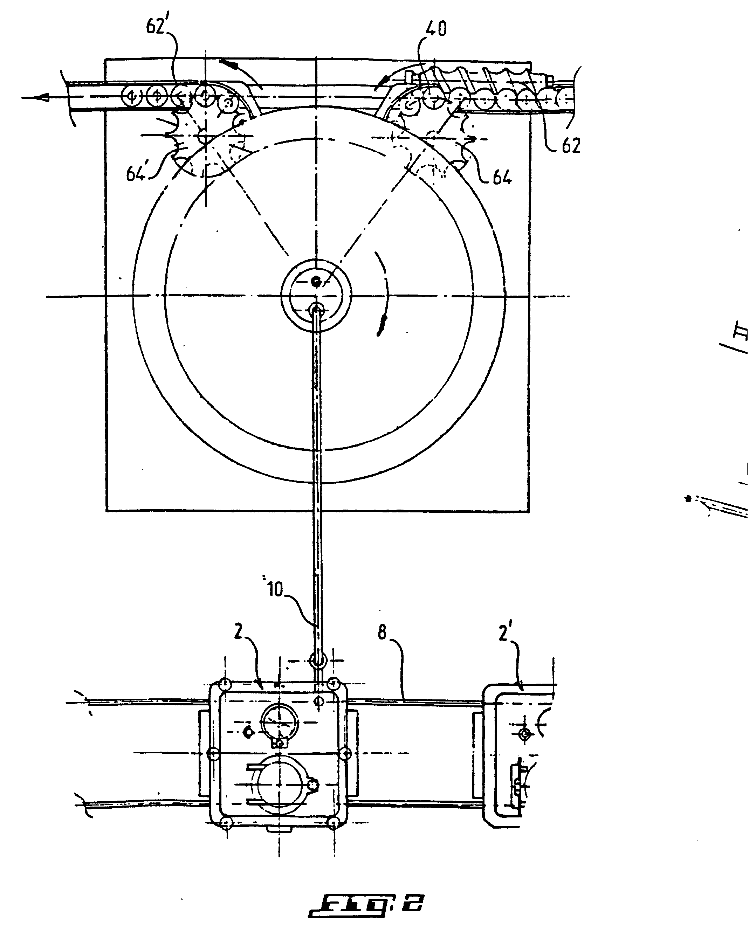

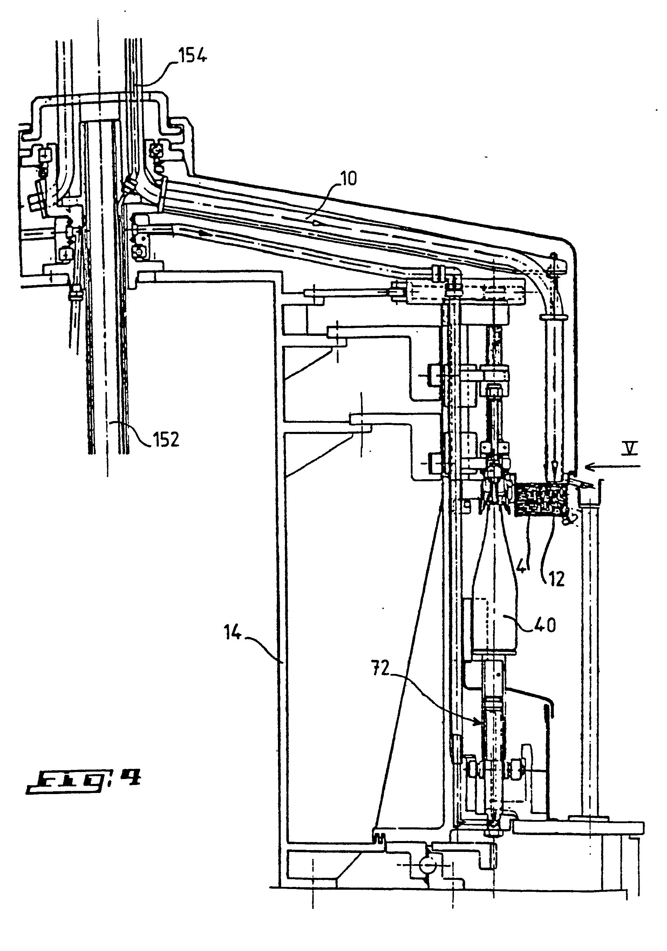

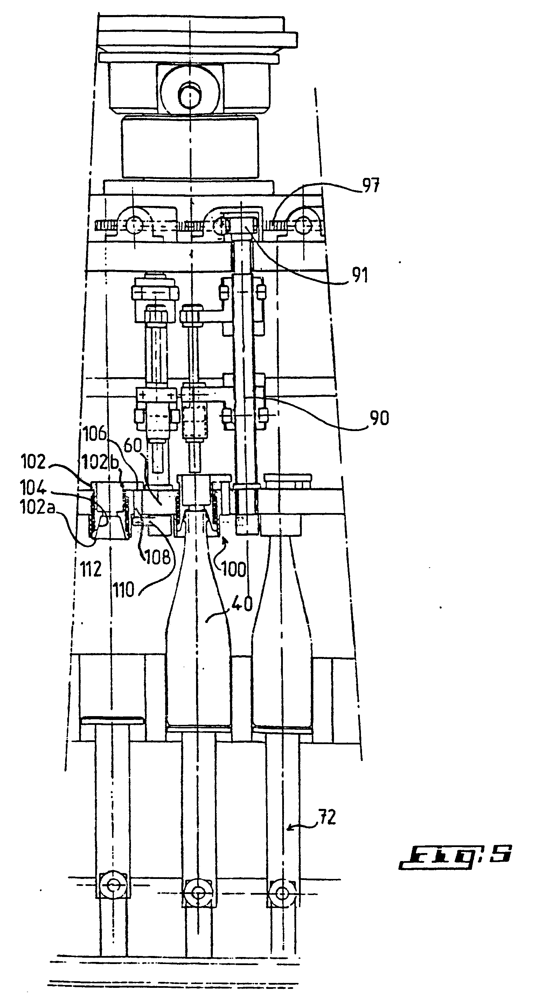

En référence à la figure 1, un appareil de transfert et/ou de dosage selon la présente invention est repéré par le numéro de référence général 1. On a représenté également par le numéro de référence général 2 un chariot formant réserve de particules solides 4 fragiles. Selon l'exemple représenté, actuellement préféré, ces particules solides fragiles peuvent être constituées par des billes sphériques d'alginate de calcium incluant des microorganismes par exemple des levures servant à la fermentation d'un liquide, tel que du vin. De préférence ce liquide est constitué par du vin, en particulier du vin de champagne. Les particules solides 4 sont en suspension dans un liquide 5 constitué de préférence par du vin. Cette suspension est rendue homogène par une agitation réalisée au moyen d'un agitateur 6. Le chariot 2 est monté déplaçable sur des rails 8 et visibles à la figure 2 de manière à être remplacé par un chariot ou wagon de rechange 2'. Pour ce faire, le chariot 2 est connecté de manière aisément déconnectable par tout moyen de liaison rapide connu 9 à un conduit 10 que l'on voit bien à la fig 4 et qui amène les particules solides 4 en suspension dans un bac 12 annulaire prévu à l'intérieur de l'appareil 1, et qui est solidaire du châssis 14 de l'appareil, de position fixe ou tournant par solidarité avec le barillet 60 décrit plus loin.

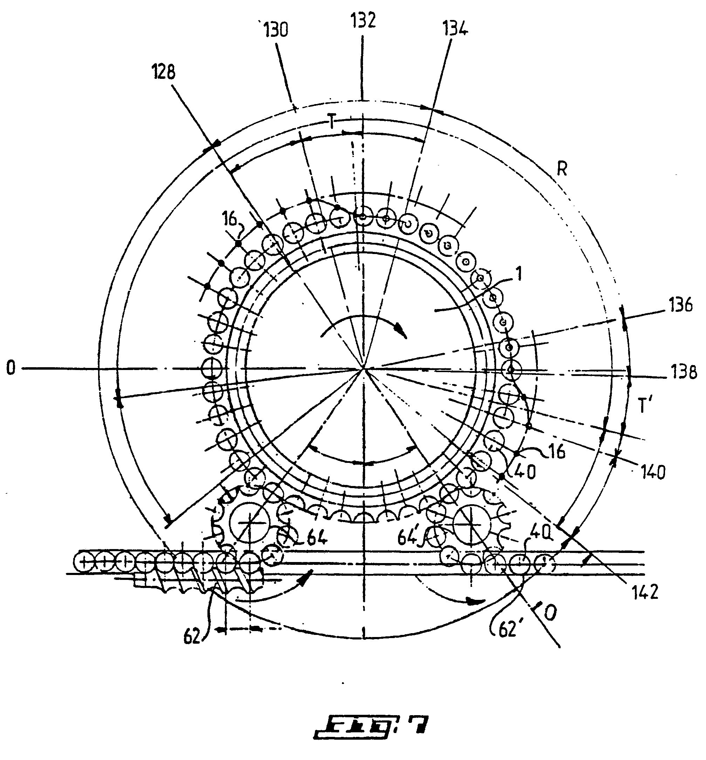

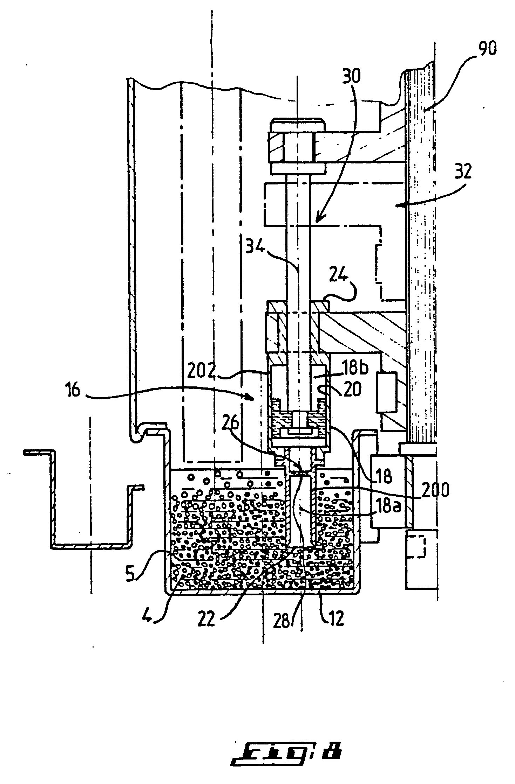

Comme on peut le voir clairement en référence aux figures 3, 4 et 8, l'appareil selon l'invention 1 est caractérisé en ce qu'il comprend un dispositif de transfert et/ou de dosage 16 comprenant une chambre 18 allongée comportant une paroi latérale 20, de préférence essentiellement cylindrique comme représenté, définissant ladite chambre, ladite chambre ayant une extrémité inférieure ouverte 22 et une extrémité supérieure fermée 24 et comportant une cloison transversale 26 pourvue d'au moins un orifice 28 et de préférence une pluralité d'orifices comme représenté, de diamètre inférieur au diamètre desdites particules solides 4, disposée sensiblement perpendiculairement à ladite paroi latérale 20 et à distance des extrémités 22, 24 de ladite chambre. On conçoit aisément qu'ainsi cette cloison transversale 26 subdivise la chambre 18 en deux compartiments communiquants, un premier compartiment 18a de transfert et/ou de dosage proprement dit se terminant à son extrémité inférieure par une ouverture définie par l'extrémité inférieure ouverte 22 de la chambre 18, et un deuxième compartiment 18b dit d'aspiration ou de refoulement coopérant avec des moyens d'aspiration ou de refoulement 30; et des moyens d'actionnement 32 desdits moyens d'aspiration ou de refoulement 30 (fig. 3 et 8).

Selon un mode de réalisation actuellement préféré, les moyens d'aspiration ou de refoulement 30 comprennent un piston 34 agencé dans le deuxième compartiment 18b dit d'aspiration ou de refoulement, de manière coulissante relativement audit compartiment qui forme ainsi un corps de vérin; ledit piston 34 étant actionné par les moyens d'actionnement 32 précités.

Selon le mode de réalisation représenté actuellement préféré, le dispositif de transfert et/ou de dosage 16 est monté déplaçable en translation verticale et en rotation relativement au châssis 14, entre une position de prélèvement ou d'aspiration des particules solides 4 en suspension dans le réservoir 12, qui est représentée à la figure 3; une position de refoulement représentée à la figure 4, des particules solides 4 dans un récipient quelconque, notamment une bouteille 40, que l'on voit bien aux figures 3 et 4.

D'autre part, selon également un mode de réalisation actuellement préféré, les moyens d'actionnement 32 comprennent des moyens de commande mécanique. De préférence, ces moyens de commande mécanique comprennent des éléments formant came 44 et 46 coopérant avec des éléments suiveurs de came 50 et 52.

D'autre part, selon un mode de réalisation actuellement préféré, l'appareil selon l'invention 1 comprend un barillet 60 monté rotatif relativement au châssis 14, et pourvu d'une pluralité de dispositifs 16 de transfert et/ou de dosage espacés entre eux selon un pas prédéterminé. Des moyens 62, 64 d'acheminement de récipients 40 de réception des particules solides, notamment des bouteilles, sont également prévus pour acheminer lesdits récipients en regard de chaque dispositif de transfert et/ou de dosage 16, comme cela est clairement compréhensible à partir des figures 2, 3 et 4 notamment. Par exemple on prévoit 40 dispositifs 16 pour atteindre une cadence élevée, par exemple 25.000 bouteilles par heure.

Ces moyens d'acheminement peuvent comprendre plus précisément un barillet 64 de distribution de récipients 40 radialement externe par rapport au barillet 60 comportant les dispositifs de transfert et/ou de dosage 16.

Naturellement également, des moyens de mise en rotation synchronisée du barillet 60 pourvu des dispositifs de transfert et/ou de dosage et du barillet de distribution 64 sont prévus. De tels moyens de synchronisation sont bien connus dans l'art et comprennent des systèmes à roues dentées telles que les roues dentées 66, 68 visibles à la figure 3.

On observera par exemple que les récipients 40 peuvent être amenés l'un derrière l'autre à l'aide des moyens 62 constitués selon l'exemple représenté par une vis sans fin, de manière tout à fait classique.

Ainsi, le barillet 64, entraîné en rotation par un arbre 70 commun à la roue dentée 68, fait passer les récipients 40 depuis les moyens 62, constitués ici par une vis sans fin, sur des moyens de réception de récipients 72 que l'on voit bien aux figures 3 et 4.

Ces moyens de réception, comme les moyens de distribution, sont tout à fait classiques dans la technique du remplissage de récipients notamment des bouteilles.

Ces noyens de réception 72 comprennent un élément support 74 creux dans lequel est placé un piston de manière à former un vérin pneumatique par une alimentation depuis le bas, c'est-à-dire dans le canal 78 par un fluide hydraulique, en particulier de l'air, de manière à ce que dans le cas de la présence d'une pression sur le goulot de la bouteille, l'élément support 74 se déplace, en particulier vers le bas, en évitant d'endommager le récipient, en particulier lorsqu'il s'agit d'une bouteille 40 en verre ou autre matière fragile.

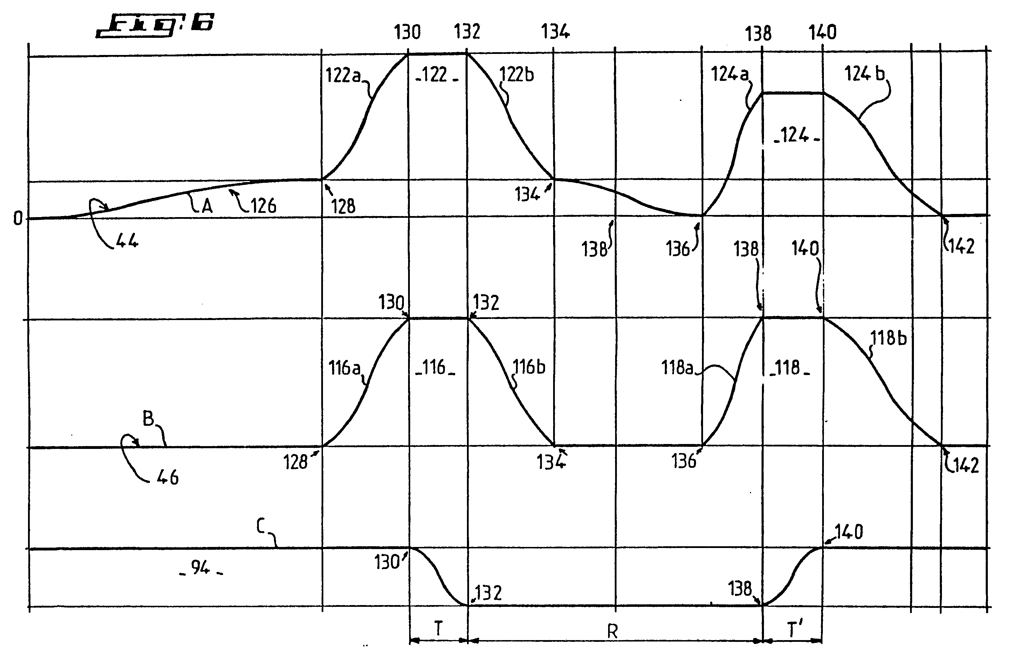

Cette modification automatique du positionnement des récipients 40 est clairement visible à la figure 5.

On notera enfin que les moyens de réception 72 sont guidés en déplacement par un système de galets 80 roulant dans des chemins de came 82 appropriés définis dans une partie correspondante du barillet 60.

Naturellement, on prévoit de préférence des moyens d'acheminement identiques à la sortie de l'appareil selon l'invention 1, qui sont clairement visibles à la figure 7 et qui sont référencés 62', 64'. La rotation des moyens 62', 64' est identique à celle des moyens 62, 64 mais, grâce à leur positionnement, comme clairement visible aux figures 2 et 7, les moyens d'acheminement 62', 64' aboutissent à un transfert des récipients 40 au delà de l'appareil de transfert et/ou de dosage 1 jusqu'à soit une station de stockage des récipients 40, soit jusqu'à un autre appareil permettant d'introduire d'autres éléments dans les récipients. Dans le cas de bouteilles 40 destinées à être remplies de vin, on peut réaliser le remplissage des bouteilles ou récipients ou analogues 40 par le vin dans une étape ultérieure, comme cela est préféré selon l'invention bien qu'on puisse procéder en sens inverse.

Par ailleurs, nous avons vu précédemment que le dispositif de transfert et/ou de dosage 16 est monté déplaçable en translation verticale et en rotation relativement au châssis 14 entre une position de prélèvement représentée à la figure 3 et une position de refoulement représentée à la figure 4.

De préférence, selon ce mode de réalisation représenté, le dispositif de transfert et/ou de dosage 16 est solidaire en rotation d'un arbre cannelé 90 disposé sensiblement verticalement et monté en rotation libre relativement au barillet 60. Cet arbre cannelé 90 est commandé lui-même en rotation par des moyens suiveurs de came 92 coopérant avec des moyens formant came 94 solidaires du châssis 14 de l'appareil 1. Les moyens suiveurs de came 92 prennent ici la forme d'un piston se déplaçant dans un corps de vérin 96, repoussé en permanence par un moyen élastique tel qu'un ressort 98 contre les moyens formant came 94. Il est à noter que selon l'invention, les récipients 40 sont disposés de préférence sur les moyens de réception 72 sensiblement sur la circonférence de déplacement cinématique de l'axe de rotation du dispositif de transfert et/ou de dosage 16, c'est-à-dire de l'axe de rotation de l'arbre cannelé 90, de manière décalée relativement à cet arbre cannelé 90 de manière que par rotation de l'arbre cannelé 90, le dispositif de transfert et/ou de dosage 16 vienne soit se positionner au-dessus du réservoir 12 de particules solides à transférer soit encore au-dessus des récipients 40 dans lesquels doivent être transférées les particules solides (figures 3 et 4). Le corps de vérin 96 a une forme extérieure en crémaillère 97 engrenant avec une roue dentée 91 solidaire de l'arbre cannelé 90 (figures 3 et 5).

De ce fait, il est également clair que les moyens formant came 94 ont un profil de came provoquant ce déplacement de manière appropriée. Ce profil de came est représenté par la courbe C à la figure 6. On observera que dans le mode de réalisation représenté, on fait simplement varier la dimension radiale des moyens formant came 94 pour obtenir la rotation de l'arbre cannelé 90 et donc du dispositif de transfert et/ou de dosage 16. On comprend que selon l'exemple représenté, lorsque la dimension radiale des moyens formant ame 94 est la plus grande, le positionnement du dispositif de transfert et/ou de dosage 16 relativement à l'arbre cannelé 90 est celui de la figure 3, c'est-à-dire en position permettant le prélèvement des particules solides tandis que lorsque cette dimension radiale des moyens formant came 94 diminue progressivement comme dans la partie de courbe T, de la courbe C, figure 6, on provoque la rotation de l'arbre cannelé 90, ainsi que le transfert du moyen de transfert et/ou de dosage 16 au-dessus des récipients 40, position qui est représentée à la figure 4 et qui correspond à la partie de courbe R de la courbe C, qui est la position de refoulement des particules. Cet angle de rotation est naturellement prédéterminé par le profil de la came 94 et est de préférence d'environ 90°.

Selon la présente invention, l'appareil 1 comprend de préférence un dispositif de sécurité 100 qui est clairement visible à la figure 5, empêchant le refoulement des particules solides aspirées dans le premier compartiment du dispositif de transfert et/ou de dosage 16 lorsqu'il n'y a pas de récipient 40 sur les moyens de réception 72.

Selon le mode de réalisation représenté, à la figure 5, le dispositif de sécurité 100 comprend un moyen 102 formant bague, de préférence de forme sensiblement cylindrique, comportant une partie inférieure adaptée à l'extrémité supérieure des récipients 40. Ainsi, dans le cas où les récipients 40 sont formés par des bouteilles, la partie inférieure 102a de la bague 102 comprend une cavité interne 104 à profil tronconique dont la petite base est dirigée vers l'intérieur de la bague 102. Cette bague 102 est montée déplaçable verticalement relativement au barillet 60 de manière que lors de la réception d'un récipient 40 sur les moyens de réception 72, le récipient va repousser vers le haut la bague, en provoquant ainsi un positionnement exact du récipient 40 grâce au profil 104. En outre, la bague 102 est pourvue, ici à sa partie supérieure 102b d'un prolongement 106 sensiblement horizontal comportant un doigt vertical 108 ayant une fonction, en position basse de la bague 102, en l'absence d'un récipient 40, de butée d'arrêt d'un doigt horizontal 110 solidaire de la partie inférieure de l'arbre cannelé 90. On conçoit aisément que, en présence d'une bouteille, comme visible à la position centrale à la figure 5, la bague 102, qui a été repoussée vers le haut par l'extrémité supérieure du récipient 40, fait remonter le doigt 108 vertical servant de butée d'arrêt escamotable, en l'escamotant vers le haut et en laissant le passage libre au doigt horizontal 110 de l'arbre cannelé 90 qui peut alors tourner librement lorsque les moyens suiveurs de came 92 auront à suivre une variation de profil des moyens formant came 94. Naturellement, la bague 102 est en permanence repoussée vers le bas par un moyen élastique habituel 112,.tel qu'un ressort.

D'autre part, le dispositif de transfert et/ou de dosage 16 est monté en translation verticale libre relativement à l'arbre cannelé 90.

Ce mouvement de translation verticale est commandé de la manière suivante (fig. 3, 5 et 8).

Le dispositif de transfert et/ou de dosage 16 est monté solidaire des éléments suiveurs de came 52, par un manchon 48 coaxial à l'arbre 90, coopérant avec des moyens formant came 46, qui sont de préférence réalisés dans le châssis 14 de l'appareil. Les moyens suiveurs de came 52 comprennent en pratique un galet 53 roulant sur un chemin de came correspondant. Le profil du chemin de came 46 est représenté à la figure 6 par la courbe B. On voit que ce profil comporte des bossages verticaux 116, 118 comportant d'une part un profil de montée 116a, 118a du dispositif de transfert et/ou de dosage et un profil de descente 116b, 118b de ce dispositif 16. On comprend qu'un déplacement vertical 16 du dispositif de dosage est nécessaire avant chaque étape de transfert entre le réservoir 12 et le récipient 40 et, pour permettre aussi une insertion correcte de l'extrémité 22 du dispositif de transfert et/ou de dosage 16 dans le réservoir 12 ou dans le récipient 40.

D'autre part, les moyens d'actionnement 30, comprenant le piston 34, comprennent également un élément formant manchon 120 monté coaxialement à l'arbre cannelé 90 pour être commandé en rotation par celui-ci, qui est solidaire des moyens suiveurs de came 50 précédemment mentionnés coopérant avec des moyens formant came 44 dont le profil de came est représenté par la courbe A à la figure 6. On voit également que ce profil A des moyens formant came 44 comprend deux bossages 122, 124, le profil du bossage 122 comportant une base évasée en amont et en aval dans le sens de la rotation du barillet 60. La partie 126 de bossage amont est antérieure au bossage 116 de manière à permettre un mouvement relatif du piston 34 et à provoquer ainsi une aspiration des particules solides 4 (suspendues dans le liquide 5) de manière appropriée, de sorte qu'au point 128, l'aspiration soit terminée et que toutes les particules solides soient aspirées dans le premier compartiment 18a. On comprend aussi qu'entre le point 128 et le point 130 les courbes 122a, 116a des bossages 122, 116 provoquent un mouvement vertical vers le haut de l'ensemble du dispositif. Ensuite entre le point 130 et le point 132, il n'y a pas de déplacement vertical du dispositif vertical 16 mais un déplacement en rotation grâce à la partie de profil T des moyens formant came 94 provoquant la rotation de l'arbre cannelé 90.

Ensuite, entre les points 132 et 134, délimitant le profil de descente 122b, 116b des bossages 122, 116, on obtient un déplacement vertical vers le bas du dispositif 16 dont l'extrémité inférieure 22 vient alors se disposer à l'intérieur du récipient 40. Entre le point 134 et le point 136 la partie de bossage aval 138 du bossage 122 provoque la descente du piston 34 à l'intérieur de la chambre 20 en refoulant ainsi des particules solides du premier compartiment 18a par refoulement concomitant du liquide du deuxième compartiment 18b. Ce refoulement est terminé au point 136 du profil de came A et B. Entre le point 136 et le point 138 le profil de montée 124a, 118a des bossages 124, 118 provoque un mouvement relatif vers le haut du dispositif 16 dans son ensemble puis entre le point 138 et le point 140 se produit le transfert inverse du dispositif 16 depuis le récipient 40 jusqu'au dessus du réservoir 12 grâce à la partie de profil T' montante des moyens formant came 94. Ensuite, du point 140 au point 142 on obtient grâce au profil de descente 124b, 118b des bossages 124, 118 un mouvement vertical vers le bas du dispositif 16 qui vient alors dans la position représentée à la figure 3.

On se retrouve alors au point de départ après avoir fait une rotation de 360° du barillet 60. Ceci est clairement compréhensible également à partir de la figure 7 représentant les mouvements cinématiques du dispositif de dosage 16 au cours de la rotation du barillet 60, les points importants de profil de came étant représentés sur la figure 7.

On conçoit également que dans le cas où il n'y a pas de récipient 40, le dispositif de sécurité 100 empêche le transfert du dispositif de dosage 16 au-dessus du récipient 40 et alors le refoulement des particules solides est réalisé dans le récipient 12 de forme annulaire.

Afin de protéger correctement l'appareil et éviter une projection accidentelle de produits quelconques dans le réservoir 12, l'appareil est pourvu d'un capot 150 supporté axialement par un piston 152 de vérin hydraulique de manière à obtenir un mouvement vertical de celui-ci par injection de fluide hydraulique par la conduite 154, afin de permettre un accès aisé à l'appareil. On prévoit, de préférence selon l'invention, d'introduire un gaz inerte et/ou stérile et/ou filtré par un conduit 156 approprié visible à la figure 3, à l'intérieur du capot 150 de manière à isoler complètement l'intérieur de l'appareil de l'extérieur. Le gaz peut être du CO2, de l'$N_2$ ou de l'air filtré et/ou stérile.

On peut naturellement réaliser diverses modifications et adaptations des moyens selon l'invention précédemment définis dans pour autant sortir du cadre de l'invention. L'invention comprend donc tous les moyens constituant des équivalents techniques des moyens décrits ainsi que leurs diverses combinaisons.

D'autre part, par exemple on peut prévoir des moyens de nettoyage de la partie "active" de l'appareil selon l'invention, c'est-à-dire du réservoir 12, et du dispositif de dosage 16.

Après la vidange du réservoir 12 formant bac annulaire, on peut faire arriver une solution de rinçage par le conduit 10 d'alimentation habituelle des particules solides et par la mise en rotation du barillet 60, on provoquera l'aspiration de cette solution dans les compartiments 18a, 18b du dispositif 16 avec ensuite le refoulement de la solution de nettoyage par le réservoir annulaire 12, en obtenant ainsi un nettoyage correct.

On comprend ainsi que l'appareil ci-dessus décrit aboutit aux avantages techniques précédemment décrits et permet de réaliser le procédé selon l'invention précédemment énoncé.

En outre, et dans le cas particulier où le liquide de mise en suspension est susceptible de fermenter, de préférence lorsque celui-ci est choisi parmi du jus de raison, du vin, de préférence du vin de champagne, les particules sont avantageusement des billes sphériques d'alginate de calcium incluant des microorganismes de fermentation, par exemple des levures.

D'autre part, selon la présente invention, les particules solides sont de préférence constituées par des billes de polymère de densité supérieure ou légèrement supérieure à celle du liquide.

D'autre part le diamètre des orifices 28 de la cloison 26 est naturellement adapté à la dimension des particules solides 4 pour les filtrer. Habituellement, lorsque les particules solides 4 sont des billes sphériques d'alginate de calcium incluant des microorganismes de fermentation par exemple des levures, le diamètre moyen est de l'ordre de 1,5 à 3 mm.

En outre, afin de permettre un changement aisé de cloison 26 formant filtre ou tamis en fonction des diamètres des particules solides, on prévoit le dispositif 26 en plusieurs pièces aisément connectables ou déconnectables entre elles par tout moyen connu. Ainsi le compartiment inférieur 18a, incorporant la cloison 26 formant filtre est formé par une pièce 200 et le compartiment supérieur 186 est formé par au moins une deuxième pièce 202.

Le réservoir 12 est alimenté à niveau constant et comprend tout dispositif connu correspondant approprié.

Il n'y a pas d'agitation prévue dans le réservoir 12 car elle est pour l'instant estimée inutile. En effet, même si les particules solides 4 décantent dans le réservoir 12, il suffit d'insérer l'extrémité de prélèvement 22 dans les particules décantées, comme visible à la figure 8, pour prélever toujours la même quantité de particules 4. En outre de préférence la quantité de liquide est faible de sorte que le réservoir contient essentiellement des particules sur un niveau important comme cela est aisément compréhensible pour un homme du métier.

L'invention comprend donc tous les moyens constituant des équivalents techniques de tous les moyens décrits.

**Revendications**

1. Procédé de transfert et/ou de dosage de particules solides fragiles sans les endommager notamment à cadence élevée, en vue d'une utilisation quelconque, par exemple l'insertion dans un récipient, notamment une bouteille, caractérisé en ce qu'il comprend:
- la prévision d'un dispositif (16) de transfert et/ou de dosage comprenant une chambre allongée (18) comportant une paroi latérale (20), de préférence sensiblement cylindrique, définissant ladite chambre, ladite chambre (18) ayant une extrémité inférieure ouverte (22) et une extrémité supérieure fermée (24) et comportant une cloison transversale (26) pourvue d'au moins un orifice (28), de préférence une pluralité d'orifices (28), de diamètre inférieur au diamètre desdites particules solides (4), disposées sensiblement perpendiculairement à ladite paroi latérale (20), et à distance des extrémités de ladite chambre de manière à subdiviser ladite chambré (18) en deux compartiments communiquant par lesdits orifices, un premier compartiment (18a) de transfert et/ ou de dosage proprement dit se terminant à son extrémité inférieure par une ouverture définie par l'extrémité inférieure ouverte de ladite chambre (18), et un deuxième compartiment (18b) dit d'aspiration ou de refoulement coopérant avec des moyens d'aspiration ou de refoulement (30);

- la mise en suspension des particules solides (4) dans un liquide (5) approprié;

- l'insertion d'au moins la partie inférieure du premier compartiment dans ledite suspension;

- l'aspiration de ladite suspension par actionnement dudit moyen d'aspiration de manière à aspirer ledit liquide jusque dans ledit deuxième compartiment tandis que les particules solides sont emmagasinées dans ledit premier compartiment de transfert et/ou de dosage jusqu'à effleurement de ladite ouverture du premier compartiment;

- le déplacement du dispositif de transfert et/ou de dosage (16) hors de ladite suspension et jusqu'à un lieu d'insertion desdites particules solides; et

- le refoulement desdites particules solides par actionnement dudit moyen de refoulement (30) en refoulant ainsi ledit liquide du deuxième compartiment et lesdites particules solides alors entraînées dans ledit liquide et dans ledit récipient notamment une bouteille.

2. Procédé selon la revendication 1, caractérisé en ce qu'on réalise les opérations d'insertion, d'aspiration, de déplacement et de refoulement de manière automatisée par la prévision de moyens de commande appropriés, de préférence des moyens de commande mécanique.

3. Procédé selon la revendication 1 ou 2, caractérisé en ce que les moyens de commande comprennent des éléments formant came coopérant avec des éléments suiveurs de came.

4. Procédé selon l'une des revendications 1 à 3, caractérisé en ce que les particules solides sont constituées par des billes de polymère de densité supérieure ou légèrement supérieure à celle du liquide susceptible de fermenter.

5. Procédé selon l'une des revendications 1 à 4, caractérisé en ce que les particules sont des billes sphériques d'alginate de calcium incluant des microorganismes de fermentation, en suspension dans un liquide susceptible de fermenter, en particulier choisi parmi du jus de raisin, du vin, de préférence du vin de champagne, de préférence les récipients étant constitués par des bouteilles.

6. Procédé selon l'une des revendications 1 à 5, caractérisé en ce que les particules solides précitées sont des billes d'alginate de calcium incluant des micro organismes de fermentation, par exemple des levures, mises en suspension dans un liquide de fermentation, de préférence choisi parmi le vin et la bière.

7. Appareil de transfert et/ou de dosage, notamment à cadence élevée, de particules solides fragiles sans les endommager, en vue d'une utilisation quelconque, par exemple l'insertion dans un récipient (40), notamment une bouteille, caractérisé en ce qu'il comprend un dispositif (16) de transfert et/ou de dosage comprenant une chambre allongée (18) comportant une paroi latérale (20), de préférence essentiellement cylindrique, définissant ladite chambre, ladite chambre (18) ayant une extrémité inférieure ouverte (22) et une extrémité supérieure fermée (24) comportant une cloison transversale (26) pourvue d'au moins un orifice (28), de préférence d'une pluralité d'orifices (28) de diamètre inférieur au diamètre desdites particules solides (4), disposées sensiblement perpendiculairement à ladite paroi latérale (20) et à distance des extrémités de ladite chambre de manière à subdiviser ladite chambre en deux compartiments communiquants, un premier compartiment (18a) de transfert et/ou de dosage proprement dit se terminant à sa partie inférieure par une ouverture définie par l'extrémité inférieure ouverte (22) de ladite chambre, et un deuxième compartiment (18b) dit d'aspiration ou de refoulement coopérant avec des moyens d'aspiration ou de refoulement (30); et des moyens d'actionnement (32) desdits moyens d'aspiration ou de refoulement (30).

8. Appareil selon la revendication 7, caractérisé en ce que le dispositif de transfert et/ou de dosage (16) précité est monté déplaçable en translation verticale et en rotation relativement à un châssis (14), entre une position de prélèvement ou d'aspiration des particules solides en suspension dans un réservoir approprié (12), et une deuxième position de refoulement des particules solides dans un récipient (40) quelconque, en particulier une bouteille.

9. Appareil selon la revendication 7 ou 8, caractérisé en ce que les moyens d'aspiration ou de refoulement précités (30) comprennent un piston (34) agencé dans le deuxième compartiment (18b) dit d'aspiration ou de refoulement, de manière coulissante relativement audit compartiment (18b) qui forme ainsi un corps de vérin; ledit piston (34) étant actionné par les moyens d'actionnement (32) précités.

10. Appareil selon l'une des revendications 7 à 9, caractérisé en ce que le moyen d'actionnement précité (32) comprend des moyens de commande mécanique, de préférence comprenant des éléments formant came et des éléments suiveurs de came.

11. Appareil selon l'une des revendications 7 à 10, caractérisé en ce qu'il comprend un barillet (60) monté rotatif relativement au châssis (14) et pourvu d'une pluralité de dispositifs de transfert et/ou de dosage (16) espacés entre eux selon un pas prédéterminé; des moyens d'acheminement (62, 64) de récipients (40) de réception des particules solides (4) notamment des bouteilles, en regard de chaque dispositif de transfert et/ou de dosage (16).

12. Appareil selon la revendication 11, caractérisé en ce que les moyens d'acheminement (62, 64; 62', 64') comprennent un barillet (64) de distribution de récipients (40), radialement externe par rapport au barillet (60) comportant des dispositifs de transfert et/ou de dosage (16); et des moyens de mise en rotation synchronisés du barillet (60) pourvus du dispositif de transfert et/ou de dosage (16) et des moyens d'acheminement (62, 64; 62', 64').

13. Appareil selon la revendication 12, caractérisé en ce que le dispositif de transfert et/ou de dosage précité (16) est solidaire en rotation d'un arbre cannelé (90) disposé sensiblement verticalement et monté en rotation libre relativement au barillet (60) et est également monté en translation libre relativement audit arbre cannelé (90).

14. Appareil selon les revendications 10 et 13, caractérisé en ce que les moyens formant came précités sont réalisés sur le châssis (14) tandis que le dispositif de transfert et/ou de dosage précité (16) comprend des premiers moyens suiveurs de came (52) coopérant avec des premiers moyens formant came (46); les moyens d'actionnement (32) des moyens d'aspiration et de refoulement (30) comprennent les seconds moyens suiveurs de came (50) coopérant avec des seconds moyens formant came (44) ayant un profil assurant le déplacement relatif par rapport au dispositif de dosage (16) dans son ensemble, lorsque cela est désiré; l'arbre cannelé (90) coopère à sa partie supérieure avec des moyens suiveurs de came (92) suivant le profil de moyens formant came (94) assurant une mise en rotation dudit arbre cannelé (90), et donc du dispositif de transfert et/ou de dosage (16) qui lui est solidaire en rotation, lorsque cela est désiré, selon un angle de rotation prédéterminé par le profil des moyens formant came (94).

15. Appareil selon la revendication 14, caractérisé en ce que le réservoir précité (12) est un réservoir de forme annulaire alimenté depuis une réserve (2), à niveau constant.

16. Appareil selon l'une des revendications 7 à 15, caractérisé en ce qu'il comprend un dispositif de sécurité (100) empêchant la rotation du dispositif de transfert et/ou de dosage (16) précité lorsque aucun récipient (30) est présent.

17. Appareil selon l'une des revendications 7 à 16, caractérisé en ce qu'il comprend un capot de protection, isolant la partie active de l'appareil de l'extérieur qui est alimenté à l'intérieur d'un gaz inerte et/ou stérile et/ou filtré de préférence en légère surpression.

**Patentansprüche**

1. Verfahren zum Übertragen und/oder Dosieren spröder fester Teilchen, ohne dass sie beschädigt werden, insbesondere mit hohem Rhythmus, zur irgendwelchen Verwendung, zum Beispiel zum Einbringen in einen Behälter, insbesondere eine Flasche, dadurch gekennzeichnet, dass es:

- eine Vorrichtung (16) zum Übertragen und/oder Dosieren vorsieht, die eine ausgedehnte Kammer (18), die eine vorzugsweise im wesentlichen zylindrische, die besagte Kammer bestimmende Seitenwand (20) aufweist, wobei die besagte Kammer (18) ein unteres offenes Ende (22) und ein oberes geschlossenes Ende (24) aufweist, und welche eine querlaufende Zwischenwand (26) aufweist, die wenigstens eine Öffnung (28), vorzugsweise eine Vielzahl von Öffnungen (28) aufweist, deren Durchmesser kleiner ist als der Durchmesser de besagten festen Teilchen (4), und die zur besagten Seitenwand (20) im wesentlichen senkrecht und von den Enden der besagten Kammer entfernt angeordnet ist, um die besagte Kammer (18) in zwei miteinander durch die besagten Öffnungen in Verbindung stehenden Abteilungen zu teilen, wobei eine erste Abteilung (18a) zum eigentlichen Übertragen und/oder Dosieren an ihrem unteren Ende mit einer, durch das untere, offene Ende der besagten Kammer (18) bestimmten Öffnung, begrenzt ist, und wobei eine zweite, sogenannte Ansaugungs- oder Förderungsabteilung (18b) mit Ansaugungs- oder Förderungsmitteln (30) zusammenarbeitet;

- das Aufschlämmen der festen Teilchen (4) in einer geeigneten Flüssigkeit (5) aufweist;

- die Einführung von wenigstens dem unteren Teil der ersten Abteilung in die besagte Aufschlämmung aufweist;

- die Ansaugung der besagten Aufschlämmung durch Betätigung des besagten Ansaugungsmittels, um die besagte Flüssigkeit bis zur besagten zweiten Abteilung anzusaugen, während die festen Teilchen in der besagten ersten Abteilung zum Übertragen und/oder Dosieren bis zum leichten Berühren von der besagten Öffnung der ersten Abteilung gespeichert sind, aufweist;

- die Verstellung der Vorrichtung (16) zum Übertragen und/oder Dosieren aus der besagten Aufschlämmung bis zu einem Einführungsort für die besagten festen Teilchen aufweist; und

- die Förderung der besagten festen Teilchen durch Betätigung des besagten Förderungsmittels (30), wobei die besagte Flüssigkeit aus der zweiten Abteilung und die besagten festen Teilchen, die dann in der besagten Flüssigkeit mitgenommen werden, in den besagten Behälter, insbesondere eine Flasche, gefördert sind, aufweist.

2. Verfahren nach Anspruch 1, dadurch gekennzeichnet, dass man die Einführungs-, Ansaugungs-, Vertellungs- und Förderungsvorgänge automatisch durchführt, indem man geeignete Steuerungsmittel, vorzugsweise mechanische Steuerungsmittel, vorsieht.

3. Verfahren nach Anspruch 1 oder 2, dadurch gekennzeichnet, dass die Steuerungsmittel nockenbildende Glieder, die mit Nockenfolgegliedern zusammenarbeiten, aufweisen.

4. Verfahren nach einem der Ansprüche 1 bis 3, dadurch gekennzeichnet, dass die festen Teilchen aus kleinen Polymerkugeln bestehen, deren Dichte grösser oder etwas grösser ist als die Dichte der gährungsfähigen Flüssigkeit.

5. Verfahren nach einem der Ansprüche 1 bis 4, dadurch gekennzeichnet, dass die Teilchen sphärische kleine Kugeln aus Kalziumalginat sind, die Gährungsmikroorganismen einschliessen, und die in einer gährungsfähigen, insbesondere aus Traubensaft, Wein, vorzugsweise Champagnerwein gewählten Flüssigkeit suspendiert sind, wobei die Behälter vorzugsweise aus Flaschen bestehen.

6. Verfahren nach einem der Ansprüche 1 bis 5, dadurch gekennzeichnet, dass die vorgenannten festen Teilchen kleine Kugeln aus Kalziumalginat sind, die Gährungsmikroorganismen, zum Beispiel Hefen, einschliessen, und die in einer, vorzugsweise aus Wein oder Bier gewählten Gährungsflüssigkeit suspendiert sind.

7. Gerät zum Übertragen und/oder Dosieren, insbesondere mit hohem Rhythmus, spröder, fester Teilchen, ohne dass sie beschädigt werden, zur irgendwelchen Verwendung, zum Beispiel zum Einbringen in einen Behälter (40), insbesondere eine Flasche, dadurch gekennzeichnet, dass es eine Vorrichtung (16) zum Übertragen und/oder Dosieren aufweist, die eine ausgedehnte Kammer (18) umfasst, die eine vorzugsweise im wesentlichen zylindrische, die besagte Kammer (18) bestimmende Seitenwand (20) aufweist, wobei die besagte Kammer (18) ein unteres offenes Ende (22) und ein oberes geschlossenes Ende (24) und eine querlaufende Zwischenwand (26) aufweist, die wenigsten eine Öffnung (28), vorzugsweise eine Vielzahl von Öffnungen (26) aufweist, deren Durchmesser kleiner ist als der Durchmesser der besagten festen Teichen (4), und die zur besagten Seitenwand (20) im wesentlichen senkrecht und von den Enden der besagten Kammer entfernt angeordnet ist, um die besagte Kammer in zwei, miteinander durch die besagten Öffnungen in Verbindung stehenden Abteilungen zu teilen, wobei eine erste Abteilung (18a) zum eigentlichen Übertragen und/oder Dosieren an ihrem unteren Ende mit einer, durch das untere, offene Ende (22) der besagten Kammer bestimmten Öffnung, begrenzt ist, und wobei eine zweite sogenannte Ansaugungs- oder Förderungsabteilung (18b) mit Ansaugungs- oder Förderungsmitteln (30) zusammenarbeitet; und Betätigungsmittel (32) für die besagten Ansaugungs- oder Förderungsmittel (30) aufweist.

8. Gerät nach Anspruch 7, dadurch gekennzeichnet, dass die vorgenannte Vorrichtung (16) zum Übertragen und/ oder Dosieren senkrecht verschiebbar und mit Bezug auf einen Rahmen (14) drehbar montiert ist, zwischen einer Abnahme- oder Ansaugungslage der, in einem geeigneten Vorratsbehälter (12) suspendierten festen Teilchen und einer zweiten Förderungslage der festen Teilchen in einen beliebigen Behälter (40), insbesondere eine Flasche.

9. Gerät nach Anspruch 7 oder 8, dadurch gekennzeichnet, dass die vorgenannten Ansaugungs- oder Förderungsmittel (30) einen, in der zweiten sogenannten Ansaugungs- oder Förderungsabteilung (18b), in Bezug auf die besagte Abteilung (18b) verschiebbar angeordneten Kolben (34) aufweist, wobei die Abteilung (18b) ein Druckzylindergehäuse bildet und der besagte Kolben (34) von den vorgenannten Betätigungsmitteln (32) betätigt ist.

10. Gerät nach einem der Ansprüche 7 bis 9, dadurch gekennzeichnet, dass das vorgenannte Betätigungsmittel (32) mechanische Steuerungsmittel, vorzugsweise mit nockenbildenden Glieder und mit Nockenfolgeglieder aufweist.

11. Gerät nach einem der Ansprüche 7 bis 10, dadurch gekennzeichnet, dass es eine, in Bezug auf den Rahmen (14) rotierend montierte, eine Vielzahl von, voneinander gemäss einem vorbestimmtcn Abstand entfernten Vorrichtungen zum Übertragen und/oder Dosieren (16) aufweisende Trommel (60) umfasst, sowie jeder Vorrichtung zum Übertragen und/oder Dosieren (16) gegenüberstehende Fördermittel (62, 64) für Behälter (40) zur Aufnahme von den festen Teilchen (4), insbesondere für Flaschen.

12. Gerät nach Anspruch 11, dadurch gekennzeichnet, dass die Fördermittel (62,64; 62', 64') eine in Bezug auf die, Vorrichtungen zum Übertragen und/oder Dosieren aufweisende Trommel (60), radial äussere Trommel (64) zur Verteilung von Behälter (40) aufweisen, sowie Mittel zum synchronisierten Drehantrieb der, die Vorrichtung (16) zum Übertragen und/oder Dosieren aufweisenden Trommel (60) und der Fördermittel (62, 64; 62', 64').

13. Gerät nach Anspruch 12, dadurch gekennzeichnet, dass die vorgenannte Vorrichtung zum Übertragen und/oder Dosieren (16) mit einer, im wesentlichen senkrecht angeordneten und in Bezug auf die Trommel (60) frei rotierenden Keilwelle (90) drehfest angeordnet ist und auch in Bezug auf die besagte Keilwelle (90) frei verschiebbar montiert ist.

14. Gerät nach Ansprüche 10 und 13, dadurch gekennzeichnet, dass die vorgenannten nockenbildenden Mittel auf dem Rahmen (14) angeordnet sind, während die vorgenannte Vorrichtung zum Übertragen und/oder Dosieren (16) erste Nockenfolgemittel (52), die mit ersten nockenbildenden Mittel (46) zusammenarbeiten, aufweist; die Betätigungsmittel (32) der Ansaugungs- und Förderungsmittel (30), die

zweiten Nockenfolgemittel (50) aufweisen, die mit zweiten nockenbildenden Mittel (44) zusammenarbeiten, deren Profil die relative Verstellung in Bezug auf die gesamte Vorrichtung zum Dosieren (16) gewährleistet, wenn erwünscht; die Keilwelle (90) an ihrem oberen Teil mit Nockenfolgemittel (92) zusammenarbeitet, entsprechend dem Profil von nockenbildenden Mitteln (94), die einen Drehantrieb der besagten Keilwelle (90) und somit der mit dieser drehfest angeordneten Vorrichtung zum Übertragen und/oder Dosieren (16) gewährleisten, wenn erwünscht, gemäss einem, von dem Profil der nockenbildenden Mittel (94) vorbestimmten Rotationswinkel.

15. Gerät nach Anspruch 14, dadurch gekennzeichnet, dass der vorgenannte Vorratsbehälter (12) ein ringförmiger Behälter ist, der aus einem Vorrat (2), mit konstantem Spiegel gespeist wird.

16. Gerät nach einem der Ansprüche 7 bis 15, dadurch gekennzeichnet, dass es eine Sicherheitsvorrichtung (100) aufweist, die die Drehung der vorgenannten Vorrichtung zum Übertragen und/oder Dosieren (16) verhindert, wenn kein Behälter (30) anwesend ist.

17. Gerät nach einem der Ansprüche 7 bis 16, dadurch gekennzeichnet, dass es eine Schutzhaube aufweist, die den aktiven Teil des Geräts nach aussen isoliert, der mit einem inerten und/oder sterilen und/oder filtrierten, vorzugsweise einen geringfügigen Überdruck aufweisenden Gas, gespeist ist.

**Claims**

1. Method for transferring and/or dosing fragile, solid particles without damaging them, in particular at an accelerated rate, for any use, e.g. for the insertion into a vessel, in particular a bottle, characterized in that it includes
- the provision of a transferring and/or dosing device (16) comprising an elongated chamber (18) which includes a side wall (20), preferably substantially cylindrical in shape, which defines said chamber, said chamber (18) having a lower opened end (22) and an upper closed end (24) and including a transversal partition (26) provided with at least one aperture (28), preferably a plurality of apertures (28) the diameter of which is smaller than the diameter of said solid particles (4), and which is arranged substantially perpendicular to said side wall (20) and at a distance from the ends of said chamber so as to subdivide said chamber (18) into two compartments communicating through said apertures, a first transferring and/or dosing compartment (18a) itself ending at its lower end by an aperture defined by the lower opened end of said chamber (18), and a second so-called sucking or delivery compartment (18b) co-operating with sucking or delivery means (30);
- the setting into a suspension of the solid particles (4) in an appropriate liquid (5);
- the insertion of at least the lower part of the first compartment into said suspension;
- the sucking of said suspension by the actuation of said sucking means so as to suck said liquid up into said second compartment, whereas the solid particles are stored in said first transferring and/or dosing compartment until skimming of said aperture of the first compartment;
- the displacement of the transferring and/or dosing device (16) out of said suspension and up to a place for inserting said solid particles; and
- the delivery of said solid particles by the actuation of said delivery means (30), thus delivering said liquid from the second compartment and said solid particles, which are then swept along into said liquid and into said vessel, in particular a bottle.

2. Method according to claim 1, characterized in that the operations of insertion, sucking, displacement and delivery are carried out in an automatized manner by the provision of appropriate control means, preferably of mechanical control means.

3. Method according to claim 1 or 2, characterized in that the control means include cam forming elements co-operating with cam following elements.

4. Method according to one of claims 1 to 3, characterized in that the solid particles consist of polymer beads whose density is greater or slightly greater than that of the liquid likely to ferment.

5. Method according to one of claims 1 to 4, characterized in that the particles are spherical calcium alginate beads including fermentation microorganisms, suspended in a liquid likely to ferment, selected in particular among grape juice, wine, preferably Champagne wine, the vessels consisting preferably of bottles.

6. Method according to one of claims 1 to 6, characterized in that the aforesaid solid particles are calcium alginate beads including fermentation microorganisms, e.g. yeasts, suspended in a fermentation liquid, preferably selected among wine and beer.

7. Apparatus for transferring and/or dosing, in particular at an accelerated rate, fragile solid particles without damaging them, for any use, e.g. for the insertion into a vessel (40), in particular a bottle, characterized in that it comprises a transferring and/or dosing device (16) comprising an elongated chamber (18) which includes a side wall (20), preferably substantially cylindrical in shape, which defines said chamber, said chamber (18) having a lower opened end (22) and an upper closed end (24) including a transversal partition (26) provided with at least one aperture (28), preferably a plurality of apertures (28) the diameter of which is smaller than the diameter of said solid particles (4), which is arranged substantially perpendicularly to said side wall (20), and at a distance from the ends of said chamber so as to subdivide said chamber into two communicating compartments, a first transferring and/or dosing compartment (18a) itself ending at its lower end by an aperture defined by the lower opened end (22) of said chamber, and a second, so-called sucking or delivery compartment (18b) co-operating with sucking or delivery means (30); and actuating means (32) for said sucking or delivery means (30).

8. Apparatus according to claim 7, characterized in that the aforesaid transferring and/or dosing device (16) is movably mounted for vertical translation and for rotation in relation to a frame (14), between a position for the sampling or the sucking of the suspended solid particles in an appropriate container (12), and a second position for the delivery of the solid particles into any vessel (40), in particular into a bottle.

9. Apparatus according to claim 7 or 8, characterized in that the aforesaid sucking or delivery means (30) comprise a piston (34) disposed in the so-called sucking or delivery second compartment (18b), in a sliding manner in relation to said compartment (18b) which thus forms a jack body, said piston (34) being actuated by the aforesaid actuating means (32).

10. Apparatus according to one of claims 7 to 8, characterized in that the aforesaid actuating means (32) comprises mechanical control means, preferably comprising cam forming elements and cam following elements.

11. Apparatus according to one of claims 7 to 10, characterized in that it comprises a cylinder (60) mounted in a rotatable manner in relation to the frame (14) and provided with a plurality of transferring and/or dosing devices (16) spaced from each other according to a predetermined pitch; means (62, 64) for the dispatching of vessels (40) for receiving the solid particles (4), in particular for bottles, facing each transferring and/or dosing device (16).

12. Apparatus according to claim 11, characterized in that the dispatching means (62, 64; 62', 64') comprise a cylinder (64) for the distribution of vessels (40), radially external in relation to the cylinder (60) including transferring and/or dosing devices (16); and means for the synchronized rotation of the cylinder (60) provided with the transferring and/or dosing device (16) and of the dispatching means (62, 64; 62', 64').

13. Apparatus according to claim 12, characterized in that the aforesaid transferring and/or dosing device (16) is solid in rotation with a splined shaft (90) arranged substantially vertically and mounted in a free rotatable manner in relation to the cylinder (60) and is also mounted in a free translating manner in relation to said splined shaft (90).

14. Apparatus according to claims 10 and 13, characterized in that the aforesaid cam forming means are built on the frame (14) whereas the aforesaid transferring and/or dosing device (16) comprises first cam following means (52) co-operating with first cam forming means (46); the actuating means (32) for the sucking and delivery means (30) comprise the second cam following means (50) co-operating with second cam forming means (44) whose profile provides a relative displacement in relation to the entire dosing device (16), when desired; the splined shaft (90) co-operates at its upper part with cam following means (92) according to the profile of cam forming means (94) providing a rotation of said splined shaft (90) and thus of the transferring and/or dosing device (16) which is solid in rotation with it, when desired, according to an angle of rotation which is predetermined by the profile of the cam forming means (94).

15. Apparatus according to claim 14, characterized in that the aforesaid container (12) is an annular container fed from a tank (2), with constant level.

16. Apparatus according to one of claims 7 to 15, characterized in that it comprises a security device (100) impeding the rotation of the aforesaid transferring and/or dosing device (16) when no vessel (30) is present.

17. Apparatus according to one of claims 7 to 16, characterized in that it comprises a protection hood which isolates the active part of the apparatus from outside which is fed inside by an inert and/or sterile and/or filtered gas, preferably under a slight overpressure.

$\underline{Fig. 1}$

0179678

FIG. 2

FIG. 4

Fig. 5

Fig. 6

FIG. 7

Fig. 8